# EUROPEAN PATENT SPECIFICATION

(11) **EP 1 130 257 B1**
(45) Date of publication and mention of the grant of the patent: **01.06.2005**
(21) Application number: 01301925.2
(22) Date of filing: 02.03.2001
(51) Int. Cl.: F03G 7/06

(54) **Shape memory alloy bundles and actuators**
Bündel aus Drähten aus Formgedächtnismaterial und Stellantriebe
Faisceaux de fils en matière de mémoire de forme et actionneurs

(30) Priority: 03.03.2000 US 517938
(43) Date of publication of application: 05.09.2001
(60) Divisional application: 05000313.6
(73) Proprietor: United Technologies Corporation, Hartford, Connecticut 06103 (US)
(72) Inventor: Rey, Nancy M., Glastonbury, CT 06033 (US); Rukus, Robert M., Vernon, CT 06066 (US); Miller, Robin Mihekun, Ellington, CT 06029 (US); Kettle, John L., Vernon, CT 06066 (US); Tillman, Thomas G., West Hartford, CT 06119 (US)
(74) Representative: Leckey, David Herbert

(56) References cited:
- EP-A- 0 340 364
- EP-A- 0 496 183
- GB-A- 2 106 190
- US-A- 4 010 455
- US-A- 4 246 754
- US-A- 4 759 187
- US-A- 4 761 955
- US-A- 4 922 718
- US-A- 5 003 779
- US-A- 5 496 330
- US-A- 5 556 370
- SONG G ET AL: "APPLICATION OF SHAPE MEMORY ALLOY WIRE ACTUATOR FOR PRECISION POSITION CONTROL OF A COMPOSITE BEAM" JOURNAL OF MATERIALS ENGINEERING AND PERFORMANCE, ASM INTERNATIONAL, MATERIALS PARK, US, vol. 9, no. 3, June 2000 (2000-06), pages 330-333, XP000947349 ISSN: 1059-9495
- PATENT ABSTRACTS OF JAPAN vol. 014, no. 217 (M-0970), 8 May 1990 (1990-05-08) & JP 02 049971 A (ISHIKAWAJIMA HARIMA HEAVY IND CO LTD), 20 February 1990 (1990-02-20)
- PATENT ABSTRACTS OF JAPAN vol. 018, no. 644 (M-1718), 7 December 1994 (1994-12-07) & JP 06 249129 A (JAMCO CORP), 6 September 1994 (1994-09-06)
- PATENT ABSTRACTS OF JAPAN vol. 1996, no. 10, 31 October 1996 (1996-10-31) & JP 08 165984 A (CASIO COMPUT CO LTD), 25 June 1996 (1996-06-25)
- PATENT ABSTRACTS OF JAPAN vol. 010, no. 388 (M-549), 25 December 1986 (1986-12-25) & JP 61 178565 A (NAOMITSU TOKIEDA), 11 August 1986 (1986-08-11)
- PATENT ABSTRACTS OF JAPAN vol. 1998, no. 02, 30 January 1998 (1998-01-30) & JP 09 268969 A (YASKAWA ELECTRIC CORP), 14 October 1997 (1997-10-14)
- PATENT ABSTRACTS OF JAPAN vol. 014, no. 567 (M-1059), 17 December 1990 (1990-12-17) & JP 02 241989 A (MATSUSHITA ELECTRIC IND CO LTD), 26 September 1990 (1990-09-26)
- KURIBAYASHI K: "A new servo motor using shape memory alloy" 1989 , IEEE XP010091227 * figures 1,2 *

## Description

The present invention relates to an opposite motion mechanism comprising a plurality of shape memory alloy ("SMA") actuators driven by the SMA material.

Conventional shape memory alloy or "SMA" materials exhibit a shape memory effect and have a "parent" condition or shape and a "deformed" condition or shape. The SMA material can be deformed from the parent shape in its low temperature martensitic state. Once the shape memory alloy is heated above its phase transformation temperature for transformation to its austenitic state, the shape memory alloy attempts to regain its original or "parent" shape. SMA is typically manufactured from nickel-titanium (NiTi) alloy which can be modified with copper (Cu) and/or other various elements. Thus, one advantageous property of the SMA is that the material recovers when heated, thereby generating force output.

Currently, SMA is used in a variety of industries primarily for single actuation applications and/or in a passive capacity. In the automotive industry, SMA is placed in heat sensitive control valves which work passively when ambient temperature rises. Single or low cycle applications for SMA materials also exist in the medical industry for bone plates, artificial joints, and in dental applications. SMA materials are also used in anti-scalding shower valves. Super elastic forms of SMA materials are presently used in frames for eyeglasses and antennas for cellular telephones. Although SMA material is widely used, most of the current commercial utilization of SMA material involves passive or one time use.

US-A 5003779 discloses a generator having a tubular gear made from SMA.

According to the invention there is provided an opposite motion mechanism as claimed in claim 1.

In an embodiment of the present invention, the SMA actuators may comprise individual SMA wires which are formed into a SMA bundle.

The SMA wires forming the SMA bundles can be configured into strands, ropes, arrays or other shapes.

One advantage of the SMA bundles as used in preferred embodiments of the present invention is that the SMA bundles will not fail catastrophically under normal fatigue or overload situations. Since the SMA bundles include multiple smaller diameter wires, when one or more wires fail, such failure will be apparent during visual, electrical or other type of nondestructive inspection. Thus, when failure in one or several wires is detected, repair or replacement of the entire SMA bundle can be scheduled to avoid subsequent catastrophic failure.

Another advantage of the SMA bundle is flexibility. The SMA bundle can be bent around corners or any other configuration without incurring damaging strain. Flexibility of the SMA bundles also eliminates the need for multiple segments of the SMA material.

A further major advantage is that the flexible SMA bundles can be formed into mechanical terminations capable of withstanding great forces.

The present invention will now be described, by way of example only, with reference to the accompanying Figures, in which:
FIG. 1 is a schematic perspective view of a shape memory alloy ("SMA") bundle formed into a rope by a plurality of SMA wires for in a mechanism according to the present invention;
FIGS. 2A-D are schematic representations of cross-sections of various configurations of the SMA bundle of FIG. 1;
FIG. 3 is a schematic representation of a cross-section of a strand of the SMA bundle of FIG. 2;
FIG. 4 is a fragmented, schematic perspective view of a plurality of SMA strands of FIG. 3 forming an array;
FIG. 5 is a fragmented view of a plurality of SMA wires twisted into the strand of FIG. 3 with ends seized prior to a heat treating procedure;
FIG. 6 is a perspective view of a heat treating fixture for the SMA bundle of FIG. 1;
FIG. 7 is a fragmented view of the plurality of the SMA wires of FIG. 5 twisted into the strand subsequent to the heat treating procedure;
FIGS. 8A-F are schematic representations of various terminations of the SMA bundle of FIG. 1; and

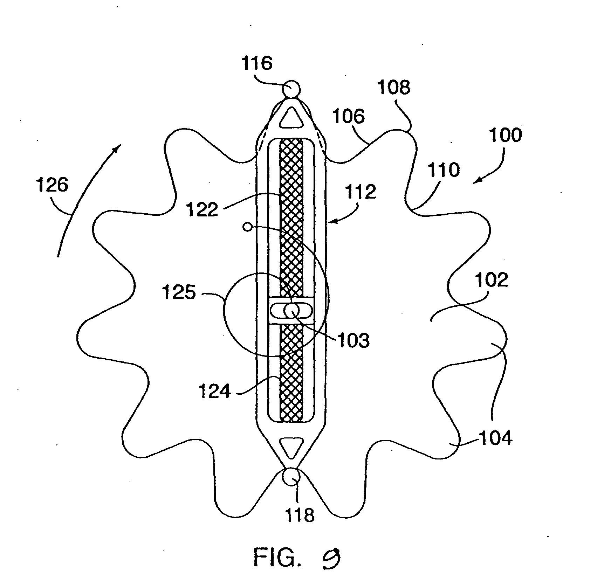

FIG. 9 is a schematic representation of an opposing motion mechanism actuated by a plurality of SMA bundles of FIG. 1.

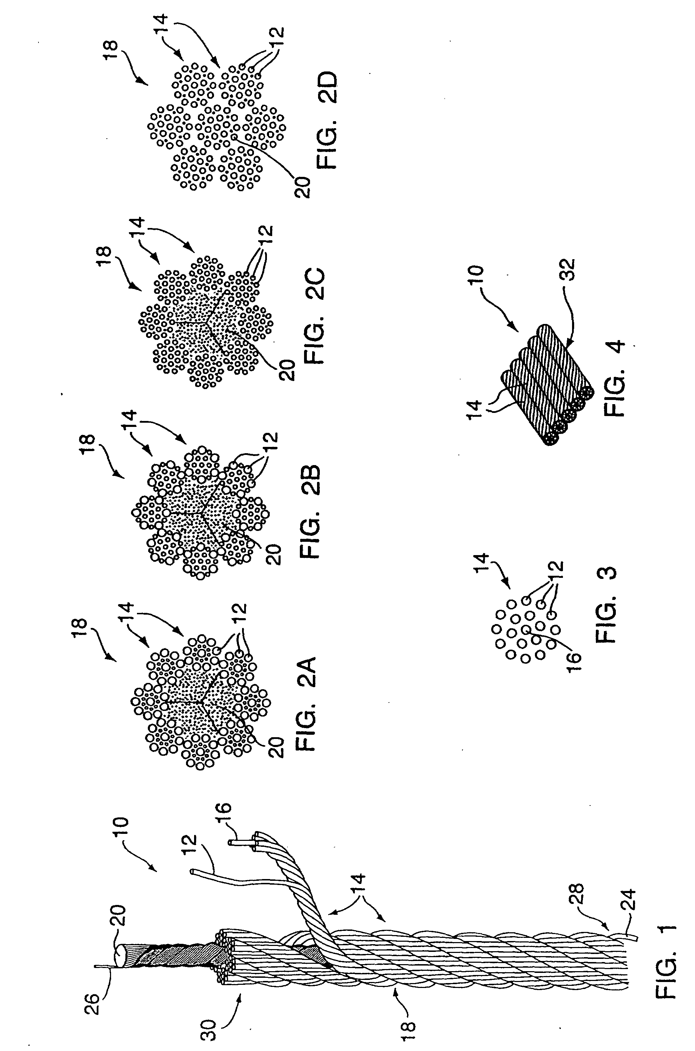

Referring to FIG. 1, a shape memory alloy (SMA) bundle 10 includes a plurality of single wires 12 formed into a plurality of strands 14. Each strand 14 has a center wire 16. The plurality of strands 14 then form a rope 18. Each rope 18 includes a core 20 also formed from the plurality of wires 12. Each wire 12 includes a first wire end 24 and a second wire end 26 corresponding to a first bundle end 28 and a second bundle end 30.

Referring to FIGS. 2-4, the SMA bundles 10 regardless of the specific strand, rope or array configuration, are formed from a plurality of raw SMA wires 12. The SMA wires 12 can be either pure nickel-titanium (NiTi) alloy or nickel-titanium alloy modified with various other elements (such as copper (Cu)) or another material that exhibits shape memory effect. The specific composition of the SMA can vary in order to optimize properties necessary for the particular application. In the preferred embodiment, the raw SMA wires were manufactured by Raychem Corporation of Menlo Park, California. However, various other companies also manufacture SMA material.

As is well known in the conventional wire rope art, the wire ropes 18 can be fabricated to have various configurations and cross-sections. The SMA ropes 18 can also be formed having various cross-sectional geometries, as shown in FIGS. 2A-D, and can be formed with or without the core 20. In the preferred construction the SMA bundle 10 is formed by the plurality of SMA wires 12 bundled into the strand 14 with each strand 14 having a total of nineteen (19) wires 12, as shown in FIG. 3. The nineteen wires 12 are arranged with one central wire 16 disposed in the center, six surrounding wires 12 forming a second row, and twelve wires 12 forming the outer row. Additionally, the SMA bundle 10 can be formed into an array 32 of strands 14, as shown in FIG. 4. The SMA wire diameters within each strand 14 and/or rope 18 can vary for improved nesting capability.

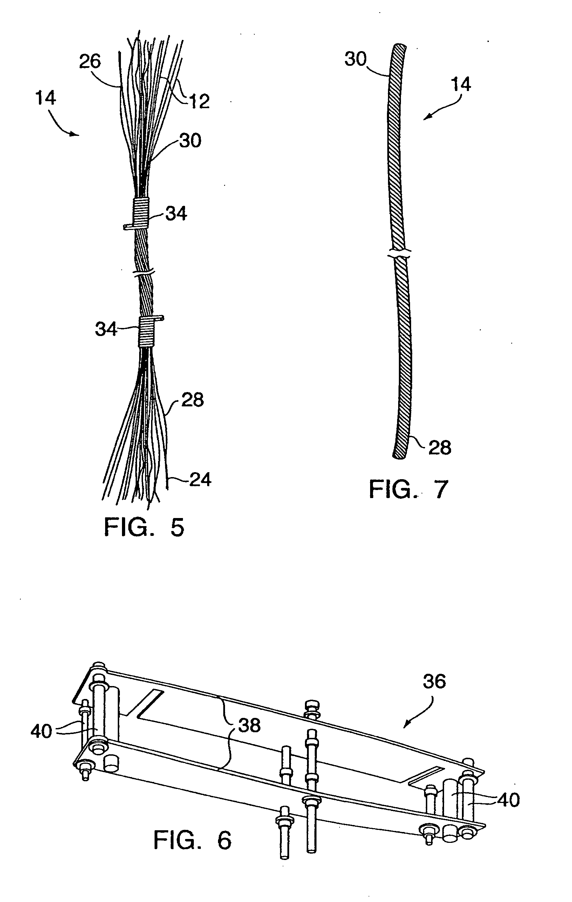

To fabricate the SMA bundle 10, a plurality of raw SMA wires 12 having first and second ends 24, 26, are formed into strands 14 and then ropes 18. As the individual raw SMA wires 12 are formed into strands 14 and then ropes 18, the first and second ends 28, 30 of each strand 14 and rope 18 are seized with seizing ties 34 to maintain rope shape and prevent unraveling, as known in wire rope art and as shown in FIG. 5. Although traditional wire rope techniques are used to form the rope 18, in the preferred construction no lubricants or oils are used with SMA ropes 18 to minimize contamination of heat treatment ovens. Additionally, plastic guides (not shown) rather than conventional metal guides are used to minimize heating of the SMA material during the lubrication-free rope forming process.

Subsequent to forming the SMA bundle 10, the bundle must be placed in tension and be kept taut to prevent unraveling and relative rotation of the wires 12 in the strand 14 and/or strands 14 in the rope 18 during the subsequent procedure. In the preferred embodiment, the SMA bundle 10 is placed into a heat treating fixture 36, shown in FIG. 6. The heat treating fixture 36 includes sides 38 with a plurality of rods 40 disposed therebetween. Although in a preferred construction the geometry of the heat treating fixture 36 is modeled after the desired parent configuration of the SMA bundle, the heat treating fixture 36 can have any other geometry or conventional heat treatment equipment can be used. However, the heat treating fixture 36 with geometry substantially identical to the desired parent SMA bundle configuration yields a more efficient SMA bundle. Therefore, it is beneficial to incorporate the desired bends and shapes of the parent shape of the SMA bundle into the heat treating fixture 36. Subsequent to placing the SMA bundle 10 into the heat treating fixture 36, the SMA bundle 10 is placed in tension with the ends 28, 30 of the SMA bundle 10 secured onto the rods 40 of the fixture 36 to prevent relative rotation of individual SMA wires 12 in the strand 14 and/or strands 14 in the rope 18 and to ensure that the SMA rope 18 does not unravel during the heat treatment procedure, thereby establishing parent condition of the SMA bundle 10 as a tight rope, as shown in FIG. 7, with the desired bends. The SMA bundle 10 is then heat treated in accordance with the proper heat treatment procedure for SMA material.

Once the heat treatment of the SMA bundle 10 is completed, the SMA bundle 10 is cycled to eliminate the initial creep in the bundle, wherein the SMA bundle is alternatingly deformed and then heated to recover its parent shape. Although for some applications the cycling process may not be necessary, it is preferable to cycle the SMA bundle to obtain more reliable performance. The cycling process for the SMA bundle 10 is substantially similar to one used for individual SMA wires or SMA material.

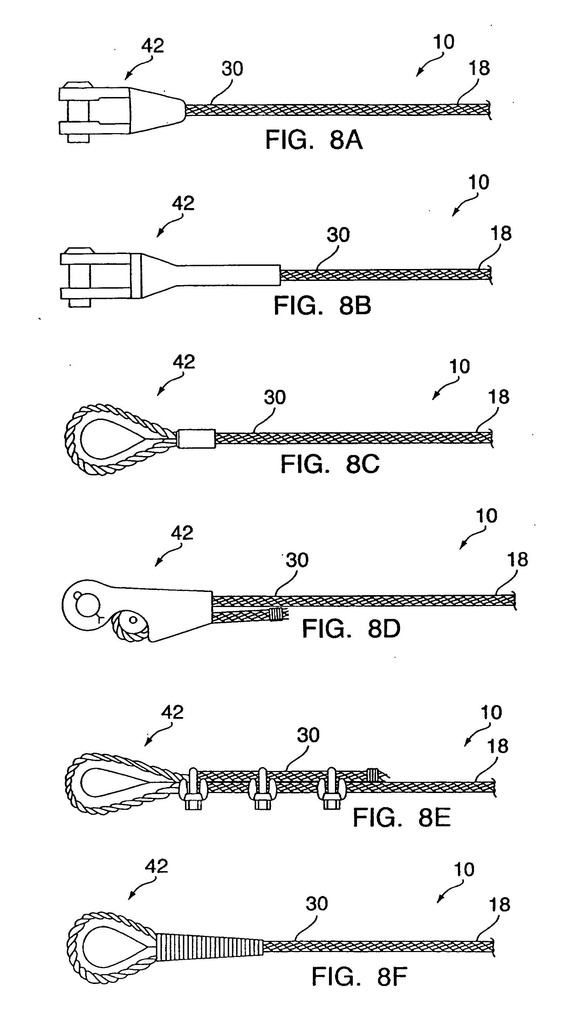

Referring to FIG. 8, the ends 28, 30 of the SMA bundle 10 can be formed into various rope terminations 42 similar to those of traditional wire ropes.

In operation, once the SMA bundle 10 is formed, heat treated, and, in some instances cycled, the SMA bundle 10 has an original shape or a "parent condition" of a rope or other type of a bundle. The SMA bundle can then be deformed in its low temperature martensitic condition. When the SMA bundle is heated above its phase transformation temperature to its austenitic state, the SMA bundle attempts to return to its unstrained, low temperature state with significant force which is used to perform useful work. The phase transformation temperature for the SMA bundle is substantially the same as the phase transformation temperature for each individual SMA wire. The amount of work the SMA bundle performs depends on a particular number of individual SMA wires forming the SMA bundle. For example, if each individual wire outputs *X* force and the SMA includes nineteen (19) wires, then the total output from the SMA bundle is approximately 19X or nineteen times the force output of the individual SMA wire. Thus, various configurations of SMA bundles can be formed to obtain the desired amount of force.

In order to effect change from the martensitic to austenitic phase, the SMA bundles can be heated by many alternative devices and methods. For example, the SMA bundles can be heated with hot air or hot water, conduction, convection or radiation heat, electrically, and/or by other means. However, in the preferred arrangement voltage is applied across the SMA bundle to heat the SMA material and cause the transformation of the SMA bundles from the martensitic phase to the austenitic phase. The amount of power to be applied to the SMA bundle to reach phase transformation temperature depends on various factors, such as how fast the SMA bundle must be actuated, overall size of the SMA bundle, and base temperature of the SMA bundle. Additionally, the SMA bundle can be actively cooled to expedite the transformation process from the austenitic phase to the martensitic phase.

Referring to FIG. 18, an opposing motion mechanism 100 embodying the invention includes an output member or gear 102 rotatable about a center pivot 103 and having a plurality of teeth 104 with each tooth 104 having a tooth surface 106, a tip 108, and a root 110. The opposing motion mechanism 100 also includes a contact point frame 112 disposed on both sides of the gear 102 and attaching onto a first contact point 116 and a second contact point 118. In the preferred embodiment, the contact points 116, 118 are bearings. Each contact point 116,118 engages the tooth surface 106 of the adjacent tooth 104 of the gear 102. The frame 112 is fixed at the center pivot 103 or to any structure (not shown). A first SMA actuator 122 and a second SMA actuator 124 are disposed on opposite sides of the center pivot 103 and are secured to the frame 112. Each SMA actuator 122, 124 has a parent condition and a deformed condition. The mechanism 100 also includes a biasing member 125.

In operation, the first and second SMA actuators 122, 124 of the opposing motion mechanism 100 are alternatingly heated and, potentially, cooled. In the preferred embodiment of the present invention, the parent condition of each SMA actuator 122, 124 is extended, whereas the deformed condition of each SMA actuator is compressed. As the first SMA actuator 122 is heated, it extends, pushing the first bearing 116 upward toward the tip 108 of the corresponding tooth 104, eventually clearing the tip 108 of the tooth 104. While the first SMA actuator 122 is extended, the second SMA actuator 124 is compressed, pushing the second bearing 118 toward the root 110 of the corresponding tooth 104 and thereby rotating the gear 102, as indicated by arrow 126. Subsequently, the second SMA actuator 124 is heated. Upon heating, the second SMA actuator 124 extends, pushing the second bearing 118 upwards toward the tip 108 of the corresponding tooth 104, eventually clearing the tip 108 of the tooth 104. While the second SMA actuator 124 is extended, the first SMA actuator 122 is contracted, pushing the first bearing 116 toward the root 110 of the following tooth 104 and thereby continuing to rotate the gear 102, as indicated by arrow 126.

Thus, the mechanism 100 with two SMA actuators 122, 124 results in step continuous motion of the gear 102. Additionally, the gear motion can be reversed by biasing the spring 125 in the reverse direction. In the preferred embodiment of the present invention, the SMA actuators 122, 124 are SMA bundles 10, as described above. However, the SMA actuators 122, 124 can also be tubes or rods. Furthermore, the parent shape of the SMA actuators can be either extended or contracted. Additionally, in the preferred embodiment of the present invention, the SMA actuators 122, 124 are heated to return from a deformed condition to its parent condition. However, the SMA actuators 122, 124 also can be cooled to expedite the actuation cycle.

One advantage of the SMA bundles 10 as used in preferred embodiments of the present invention is that the SMA bundles will not fail catastrophically under normal fatigue or overload situations. Since the SMA bundles include multiple smaller diameter wires, when one or more wires fail, such failure will be apparent during visual, electrical or other types of nondestructive inspection. Thus, when failure in one or several wires is detected, repair or replacement of the entire SMA bundle can be scheduled to avoid subsequent catastrophic failure.

Another advantage of the SMA bundle is flexibility. The SMA bundle 10 can be bent around corners or any other configuration without incurring damaging strain. Flexibility of the SMA bundles also eliminates the need for multiple segments of the SMA material.

A further major advantage is that the flexible SMA bundles can be formed into mechanical terminations capable of withstanding great forces.

While the present invention has been illustrated and described with respect to a particular embodiment thereof, it should be appreciated by those of ordinary skill in the art, that various modifications to this invention may be made without departing from the scope of the present invention. For example, the core 20 of the SMA rope 18 or a center wire 16 of strands 14 can be fabricated from material different than the SMA material. Additionally, although certain embodiments describe a particular parent shape and a particular deformed shape, the parent and deformed shapes are interchangeable. Furthermore, the SMA wire can have either a round cross-section or any other shape of a cross-section. Also the SMA actuator may comprise a rigid SMA member.

## Claims

1. An opposite motion mechanism (100) comprising:
an output member (102) having a plurality of teeth (104), each said tooth (104) having a tooth surface (106);
a frame (112) having a first contact point (116) and a second contact point (118), each said contact point being adapted to engage a corresponding tooth (104) of said plurality of teeth of said output member (102); and
a plurality of shape memory alloy SMA" actuators (122,124) secured to said frame (112) and cooperating with each other to alternatingly transition from martensitic state to austenitic state for actuating said output member (102) by having said first and second contact points (116, 118) sequentially engage said tooth surface (106) of said plurality of teeth (104) of said output member (102).

2. The opposite motion mechanism (100) according to Claim 1 further comprising a biasing member (125) secured to said frame for biasing said mechanism.

3. The opposite motion mechanism (100) according to Claims 1 or 2 wherein said first and second contact points (116, 118) are bearings.

4. The mechanism according to any of Claims 1-3, wherein said SMA actuator is a SMA bundle (10) comprising a plurality of individual SMA wires (12).

5. The mechanism according to any of Claims 1-3, wherein said SMA actuator is a SMA rigid member.

## Patentansprüche

1. Mechanismus (100) mit gegenläufiger Bewegung, aufweisend:
ein Ausgangselement (102) mit einer Mehrzahl von Zähnen (104), wobei jeder Zahn (104) eine Zahnoberfläche (106) aufweist;
einen Rahmen (112) mit einem ersten Kontaktpunkt (116) und einem zweiten Kontaktpunkt (118), wobei jeder Kontaktpunk dazu ausgebildet ist, mit einem entsprechenden Zahn (104) der Mehrzahl von Zähnen des Ausgangselements (102) in Eingriff zu treten; und
eine Mehrzahl von Aktuatoren (122, 124) aus Legierungsmaterial mit Formerinnerungsvermögen, die an dem Rahmen (112) befestigt sind und miteinander zusammenarbeiten, um abwechselnd einen Übergang von dem martensitischen Zustand in den austenitischen Zustand auszuführen, um das Ausgangselement (102) zu betätigen, indem der erste und der zweite Kontaktpunkt (116, 118) sequenzmäßig mit der Zahnoberfläche (106) der Mehrzahl von Zähnen (104) des Ausgangselements (102) in Eingriff gebracht werden.

2. Mechanismus (100) mit gegenläufiger Bewegung nach Anspruch 1, weiterhin mit einem Vorspannelement (125), das zum Vorspannen des Mechanismus an dem Rahmen befestigt ist.

3. Mechanismus (100) mit gegenläufiger Bewegung nach Anspruch 1 oder 2,
wobei es sich bei dem ersten und dem zweiten Kontaktpunkt (116, 118) um Lager handelt.

4. Mechanismus (100) nach einem der Ansprüche 1 bis 3,
wobei es sich bei dem Aktuator (122, 124) aus Legierungsmaterial mit Formerinnerungsvermögen um ein Bündel (10) aus Legierungsmaterial mit Formerinnerungsvermögen handelt, das eine Mehrzahl einzelner Drähte (12) aus Legierungsmaterial mit Formerinnerungsvermögen aufweist.

5. Mechanismus (100) nach einem der Ansprüche 1 bis 3,
wobei es sich bei dem Aktuator (122, 124) aus Legierungsmaterial mit Formerinnerungsvermögen um ein starres Element aus Legierungsmaterial mit Formerinnerungsvermögen handelt.

## Revendications

1. Mécanisme à mouvement opposé (100) comprenant :
un élément de sortie (102) possédant une pluralité de dents (104), chacune desdites dents (104) possédant une surface de dent (106) ;
une armature (112) possédant un premier point de contact (116) et un second point de contact (118), chacun desdits points de contact étant adapté pour se mettre en prise avec une dent correspondante (104) de ladite pluralité de dents dudit élément de sortie (102) ; et
une pluralité d'actionneurs en alliage à mémoire de forme (SMA) (122, 124) fixés sur ladite armature (112) et coopérant les uns avec les autres afin de passer de manière alternée d'un état martensitique à un état austénitique afin d'actionner ledit élément de sortie (102) grâce au fait que lesdits premier et second points de contact (116, 118) se mettent en prise successivement avec ladite surface de dent (106) de ladite pluralité de dents (104) dudit élément de sortie (102).

2. Mécanisme à mouvement opposé (100) selon la revendication 1, comprenant en outre un élément d'inclinaison (125) fixé sur ladite armature afin d'incliner ledit mécanisme.

3. Mécanisme à mouvement opposé (100) selon la revendication 1 ou 2, dans lequel lesdits premier et second points de contact (116, 118) sont des paliers.

4. Mécanisme à mouvement opposé (100) selon l'une quelconque des revendications 1 à 3, dans lequel ledit actionneur SMA (122, 124) est un faisceau SMA (10) comprenant une pluralité de fils SMA individuels (12).

5. Mécanisme à mouvement opposé (100) selon l'une quelconque des revendications 1 à 3, dans lequel ledit actionneur SMA (122, 124) est un élément rigide SMA.
